# EUROPÄISCHE PATENTSCHRIFT

(11) **EP 2 834 900 B1**
(45) Veröffentlichungstag und Bekanntmachung des Hinweises auf die Patenterteilung: **25.12.2019**
(21) Anmeldenummer: 13707865.5
(22) Anmeldetag: 05.03.2013
(51) Int. Cl.: H02J 50/12, H02J 50/90

(54) **DRAHTLOSE ENERGIEÜBERTRAGUNG**
WIRELESS POWER TRANSMISSION
TRANSMISSION D'ÉNERGIE SANS FIL

(30) Priorität: 05.04.2012 DE 102012205730
(43) Veröffentlichungstag der Anmeldung: 11.02.2015
(73) Patentinhaber: Robert Bosch GmbH, 70442 Stuttgart (DE)
(72) Erfinder: MACK, Juergen, 73035 Goeppingen (DE)
(86) Internationale Anmeldenummer: PCT/EP2013/054422
(87) Internationale Veröffentlichungsnummer: WO 2013/149779

(56) Entgegenhaltungen:
- EP-A2- 2 328 252
- US-A1- 2011 062 793
- US-B2- 6 825 620

## Beschreibung

Die Erfindung betrifft eine drahtlose Energieübertragung. Insbesondere betrifft die Erfindung eine induktive Energieübertragung zwischen einem Sender und einem Empfänger.

### Stand der Technik

Ein elektrisches Kleingerät, beispielsweise eine Taschenlampe oder ein Ackuschrauber, kann eine Batterie umfassen, um ortsungebunden betrieben zu werden. Soll die Batterie wieder aufgeladen werden, so kann eine drahtlose Energieübertragung verwendet werden, bei der beispielsweise ein Netzteil den Sender und das elektrische Kleingerät den Empfänger umfasst. Der Sender umfasst eine Sendespule und der Empfänger umfasst eine Empfangsspule. Die beiden Spulen werden zur Energieübertragung induktiv miteinander gekoppelt, indem das elektrische Kleingerät so am Netzteil angeordnet wird, dass die Empfangsspule in einem elektromagnetischen Einflussbereich der Sendespule zu liegen kommt. Die Sendespule wird in eine elektrische Schwingung versetzt, so dass sich in ihrem Einflussbereich ein elektromagnetisches Wechselfeld einstellt, aus welchem mittels der Empfangsspule ein elektrischer Strom entnommen werden kann. Der entnommene Strom wird aufbereitet und zum Aufladen der Batterie des Kleingeräts verwendet.

Das Netzgerät ist üblicherweise auf der Basis eines Resonanztransformators aufgebaut, der mittels einer Brückenschaltung angeregt wird und neben der Sendespule eine Resonanzkapazität umfasst. Durch die periodische Anregung stellt sich eine elektrische Schwingung ein, die idealerweise der Resonanzfrequenz des Resonanztransformators entspricht. Diese Resonanzfrequenz ist jedoch unter anderem von einer relativen Anordnung der Empfangsspule bezüglich der Sendespule abhängig. Ist das Kleingerät einer Bewegung bezüglich des Netzteils unterworfen, beispielsweise in Form einer gelegentlichen Lageänderung durch eine Benutzung oder durch eine externe Vibration an Bord eines fahrenden Kraftfahrzeugs, so ändert sich auch die Resonanzfrequenz. Ist die Brückenschaltung dazu eingerichtet, den Resonanztransformator möglichst mit seiner jeweiligen Resonanzfrequenz anzuregen, so kann eine häufige Änderung der Anregungsfrequenz erforderlich sein.

Erfolgt eine derartige Änderung ausreichend häufig so kann sie, insbesondere wenn sie einen großen Betrag hat, zu einer Überbeanspruchung von Teilen des Netzgeräts führen. Die Regelung der Anregung kann instabil werden und bei dauerhafter Belastung können sogar physikalische Schäden am Netzteil oder am Empfänger entstehen. Ist eine Sicherungsschaltung vorgesehen, um häufige bzw. heftige Regelungseinflüsse zu limitieren, so kann diese frühzeitig auslösen und so die Energieübertragung zu einem Zeitpunkt beenden, zu dem eine vollständige Ladung der Batterie noch nicht erreicht ist.

US 2011/0062793 A1 betrifft eine Einrichtung zur drahtlosen Energieübertragung. Es wird vorgeschlagen, eine Übertragungsfrequenz oberhalb einer Resonanzfrequenz zu verwenden und einen Fremdkörper oder ein Entfernen einer Empfängerspule von einer Sendespule am Ansteigen einer Betriebsspannung der Sendespule zu erkennen.

US 6,825,620 B2 zeigt eine weitere Vorrichtung zur drahtlosen Energieübertragung. Eine Übertragungsfrequenz kann in Abhängigkeit einer übertragenen Energie geändert werden.

EP 2 328 252 A2 ebenfalls eine drahtlose Energieübertragung. Eine Übertragungsfrequenz wird derart angepasst, dass eine Phasendifferenz zwischen einem Strom und einer Spannung an einer Sendespule Null wird.

Es ist Aufgabe der vorliegenden Erfindung, eine Technik zur drahtlosen Energieübertragung anzugeben, die gegenüber einer Lageänderung eines Empfängers bezüglich eines Senders unempfindlich ist.

Die Erfindung löst diese Aufgabe mittels eines Senders mit den Merkmalen des unabhängigen Anspruchs 1. Unteransprüche geben bevorzugte Ausführungsformen wieder.

### Offenbarung der Erfindung

Ein Sender zur drahtlosen Energieübertragung umfasst einen Resonanztransformator mit einer Sendespule und einer Resonanzkapazität sowie eine Brückenschaltung zur Anregung des Resonanztransformators. Darüber hinaus umfasst der Sender eine Rückkopplung zur Steuerung der Brückenschaltung in Abhängigkeit einer Änderung einer geometrischen Anordnung eines Empfängers bezüglich der Sendespule.

Häufige und insbesondere periodische Änderungen der Ansteuerung der Sendespule können in verbesserter Weise abgebaut bzw. in ihren Auswirkungen auf einzelne Bestandteile des Senders abgeschwächt werden. Dadurch kann insbesondere ein Einsatz des Senders in einem mobilen Umfeld, etwa an Bord eines Kraftfahrzeugs, ermöglicht sein.

Die Rückkopplung ist dazu eingerichtet, die Brückenschaltung auf der Basis eines elektrischen Betriebsparameters des Resonanztransformators, also der Sendespule oder der Resonanzkapazität, zu steuern. Erfindungsgemäß umfasst der elektrische Betriebsparameter einen Strom oder eine Spannung. Diese Betriebsparameter können leicht abgreifbar sein und auf eine Resonanzfrequenz des Resonanztransformators hinweisen. Die Anordnung eines Empfängers bezüglich der Sendespule bzw. die Änderung dieser Anordnung kann aus den Betriebsparametern bestimmt werden, insbesondere dann, wenn andere frequenzbestimmende Einflüsse auf den Resonanztransformator, beispielsweise eine Last, eine Frequenz und eine Anregung, konstant sind. Auf diese Weise kann der Resonanztransformator selbst als Sensor verwendet werden, ohne einen zusätzlichen Sensor vorsehen zu müssen. Die beschriebene verbesserte Lageunabhängigkeit kann so mit nur geringem zusätzlichem Aufwand erzielbar sein.

In einer besonders bevorzugten Ausführungsform außerhalb der Erfindung umfasst die Rückkopplung einen Hüllkurvendemodulator zur Bereitstellung eines Mittelwerts des Betriebsparameters und einen Differenzierer zur Bestimmung einer Änderung des Mittelwerts des Betriebsparameters. Der Hüllkurvendemodulator kann eine Hüllkurve des elektrischen Betriebsparameters bestimmen, während der Differenzierer eine zeitliche Ableitung der Hüllkurve durchführt, um ein Signal bereitzustellen, das auf die Änderung der Anordnung hinweist.

Vorteilhafterweise kann der Hüllkurvendemodulator ein negatives Ausgangssignal bereitstellen, während der Differenzierer invertierend ist. Ein invertierender Differenzierer kann schaltungstechnisch leichter zu handhaben sein. Der Hüllkurvendemodulator kann in einer Ausführungsform nur jeweils die negativen Halbwellen des Betriebsparameters auswerten, so dass sich das negative Ausgangssignal automatisch einstellt. Durch die beschriebene Anordnung kann ohne relevanten Informationsverlust eine vereinfachte Bereitstellung des auf die Änderung der geometrischen Anordnung hinweisenden Signals erzielt werden.

Der Sender umfasst eine Steuereinrichtung, um die Brückenschaltung mit einer Ansteuerfrequenz anzusteuern, wobei die Steuereinrichtung dazu eingerichtet ist, die Ansteuerfrequenz an die geometrische Anordnung anzupassen, und eine Anpassungshäufigkeit der Ansteuerfrequenz von einer Änderung der geometrischen Anordnung abhängig ist. Eine Störung in der Regelung der Resonanzfrequenz des Resonanztransformators, wie sie durch eine veränderte Anordnung des Empfängers bezüglich der Sendespule hervorgerufen werden kann, kann auf diese Weise weniger häufig, weniger stark oder weniger schnell erfolgen. Insbesondere die Bauteile des Senders können so vor einer Überlastung geschützt werden. Ein Regelbereich einer Regelschaltung zur Steuerung der Resonanzfrequenz kann so auch dann eingehalten sein, wenn sich die relative Lage des Empfängers bezüglich des Senders stark bzw. häufig ändert.

Bevorzugterweise ist die Anpassungshäufigkeit proportional zur Änderung der geometrischen Anordnung der Spulen zueinander. Dabei können zur Bestimmung der Änderung alternativ eine Änderungshäufigkeit, eine Änderungsgeschwindigkeit oder der Betrag einer Änderung herangezogen werden.

In einer Ausführungsform außerhalb der Erfindung umfasst die Rückkopplung eine Einrichtung zur Deaktivierung der Brückenschaltung, falls die zeitliche Änderung der geometrischen Anordnung ein vorbestimmtes Maß übersteigt. Dadurch kann der Sender abgeschaltet werden, bevor die Lageänderung des Empfängers bezüglich des Senders den Betrieb oder die Betriebssicherheit des Senders in Frage stellt.

Ein System zur Energieübertragung umfasst den oben beschriebenen Sender und einen Empfänger zur Anordnung im Bereich der Sendespule. Dabei ist der Empfänger vorzugsweise so eingerichtet, dass eine zeitliche Änderung der Energieaufnahme des Empfängers klein im Vergleich zu einer zeitlichen Änderung seiner relativen Anordnung zur Sendespule ist. Dieses Charakteristikum ist regelmäßig durch einen konstanten oder nur sehr langsam variablen elektrischen Verbraucher innerhalb des Empfängers erfüllt. Insbesondere kann der Empfänger eine Batterie, eine Lampe oder eine Heizung als elektrischen Verbraucher umfassen.

Ein Verfahren außerhalb der Erfindung, zur Steuerung eines Senders zur drahtlosen Energieübertragung, wobei der Sender einen Resonanztransformator mit einer Sendespule und einer Resonanzkapazität und ferner eine Brückenschaltung zur Anregung des Resonanztransformators umfasst, enthält Schritte des Bestimmens einer Änderung der geometrischen Anordnung eines Empfängers bezüglich der Sendespule und des Ansteuerns der Brückenschaltung zur Anregung des Resonanztransformators in Abhängigkeit der bestimmten Änderung.

### Kurze Beschreibung der Figuren

Die Erfindung wird nun mit Bezug auf die beigefügten Figuren genauer beschriebenen, in denen:
Fig. 1 ein System zur drahtlosen Energieübertragung;
Fig. 2 eine Schaltung zur Ansteuerung des Senders aus Figur 1, und
Fig. 3 ein Ablaufdiagramm eines Verfahrens
darstellt.

### Genaue Beschreibung von Ausführungsbeispielen

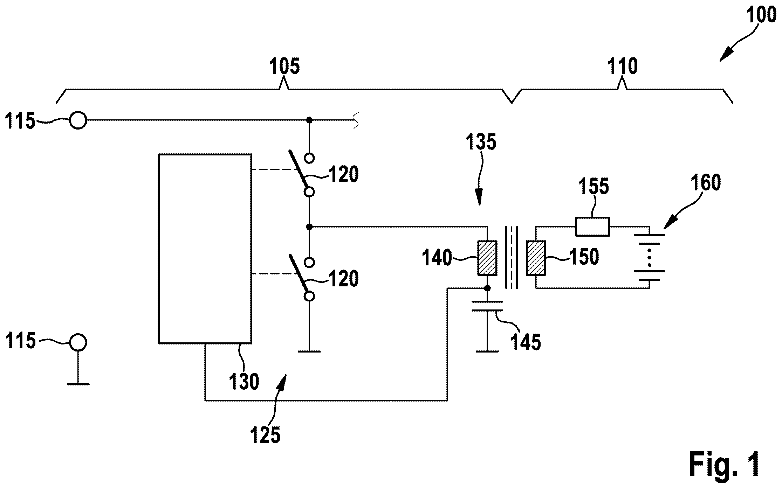

Figur 1 zeigt ein System 100 zur drahtlosen Energieübertragung. Das System 100 umfasst einen Sender 105 und einen Empfänger 110, die induktiv miteinander gekoppelt sind. Die Kopplung kann durch einen Kern, insbesondere einen weichmagnetischen Kern, unterstützt sein.

An Anschlüssen 115 des Senders 105 liegt eine Gleichspannung an. Zwei steuerbare Schalter 120 bilden eine Halbbrücke 125. Die steuerbaren Schalter 120 können beispielsweise Transistoren umfassen und anstelle der Halbbrücke 125 kann auch eine andere Brückenschaltung, beispielsweise eine H-Brücke, verwendet werden. Die beiden Schalter 120 sind in Serie zwischen den beiden Anschlüssen 115 geschaltet und können einzeln mittels einer Steuereinrichtung 130 geöffnet oder geschlossen werden. Die Steuereinrichtung 130 ist dazu eingerichtet, die Schalter 120 abwechselnd zu schließen, wobei ein Zustand, in welchem beide Schalter 120 geschlossen sind, vermieden wird, etwa durch Beachten einer periodischen Totzeit, während der keiner der Schalter 120 geschlossen ist. In einer Ausführungsform umfasst die Steuereinrichtung 130 einen spannungsgesteuerten Oszillator (voltage controlled oscillator, VCO). Die Steuereinrichtung 130 kann auch dazu eingerichtet sein, bei Bedarf beide Schalter 120 gleichzeitig zu öffnen und so die Erzeugung eines magnetischen Felds durch die Sendespule 140 zum Erliegen zu bringen bzw. abzuschalten.

Zwischen den beiden Schaltern 120 liegt ein Abgriff, der zu einem Resonanztransformator 135 führt, welcher eine Serienschaltung einer Sendespule 140 und einer Resonanzkapazität 145 umfasst. Die Steuereinrichtung 130 ist mit dem Resonanztransformator 135 verbunden, um das Öffnen und Schließen der Schalter 120 in Abhängigkeit von elektrischen Betriebsparametern des Resonanztransformators 135 durchzuführen. Dabei wird periodisch elektrische Energie aus den Anschlüssen 115 so an den Resonanztransformator 135 geleitet, so dass dieser beginnt, elektrisch zu schwingen und ein elektromagnetisches Wechselfeld im Bereich der Sendespule 140 aufzubauen.

Der Empfänger 110 umfasst eine Empfangsspule 150, eine Steuereinrichtung 155 und einen elektrischen Verbraucher 160. Der Verbraucher 160 ist exemplarisch als Batterie dargestellt, die mittels der Steuereinrichtung 155 und der Empfangsspule 150 aufgeladen werden kann. In anderen Ausführungsformen kann der elektrische Verbraucher 160 auch beispielsweise eine ohmsche Last wie eine Lampe, eine Heizung oder einen anderen Verbraucher umfassen, dessen Leistungsaufnahme sich im Vergleich zur Schwingung des Resonanztransformators 135 nur langsam ändert.

Die Empfangsspule 150 befindet sich in einem elektromagnetischen Einflussbereich der Sendespule 140. Anders ausgedrückt ist die Empfangsspule 150 magnetisch mit der Sendespule 140 gekoppelt, wobei ein Kern, beispielsweise in Gestalt eines ein. oder zweiteiligen weichmetallischen Ankers, zur Verbesserung der induktiven Kopplung der Sendespule 140 mit der Empfangsspule 150 vorgesehen sein kann.

Der Empfänger 110 ist nicht notwendigerweise vollständig starr bezüglich des Senders 105 bzw. der Sendespule 140 angeordnet. Vielmehr kann der Empfänger 110 bezüglich des Senders 105 eine periodische oder aperiodische Bewegung vollführen, wodurch die Energieübermittlung zwischen der Sendespule 140 und der Empfangsspule 150 gestört sein kann. Durch diese relative Lageänderung kann sich eine Resonanzfrequenz des Resonanztransformators 135 ändern.

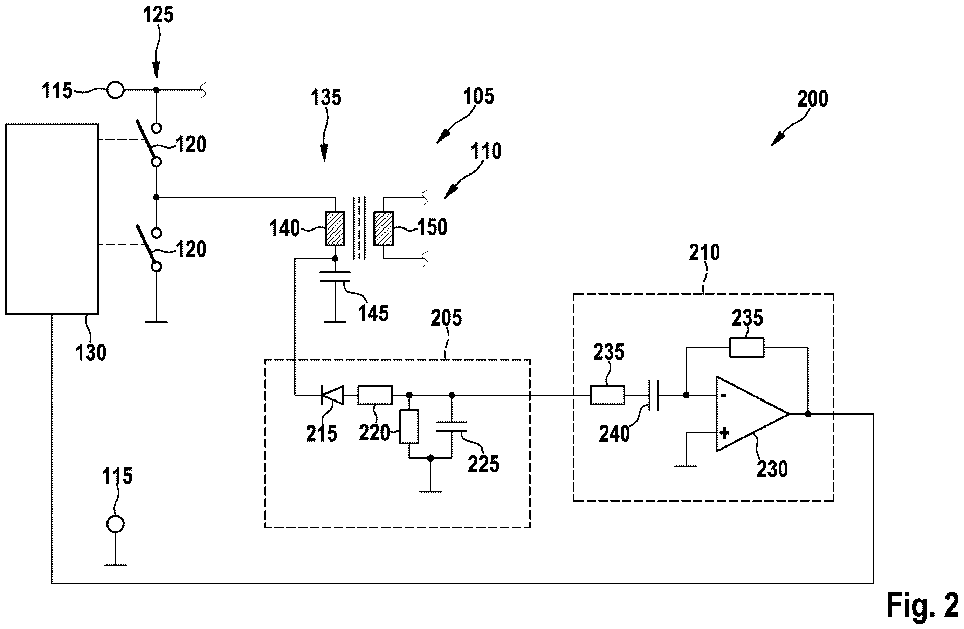

Figur 2 zeigt eine Schaltung 200 zur Ansteuerung des Senders 105 aus Fig. 1. Dabei ist der Empfänger 110 nur rudimentär durch seine Empfangsspule 150 repräsentiert.

Im Vergleich zu der in Figur 1 gezeigten Ausführungsform erfolgt hier eine Rücckopplung vom Resonanztransformator 135 zur Steuereinrichtung 130 über einen Hüllkurvendemodulator 205 mit einem nachgeschalteten Differenzierer 210. Der Hüllkurvendemodulator 205 ist dazu eingerichtet, auf der Basis eines elektrischen Parameters des Resonanztransformators 135, insbesondere eines Stroms oder einer Spannung an der Sendespule 140 oder der Resonanzkapazität 145, eine Hüllkurve zu bestimmen, die ein Maß für den Strom bzw. die Spannung am Resonanztransformator 135 unter Vernachlässigung dessen periodischer Schwingung repräsentiert. Anders ausgedrückt stellt der Hüllkurvendemodulator 205 ein Gleichspannungssignal bereit, welches auf eine Wechselspannung bzw. einen Wechselstrom am Resonanztransformator 135 hinweist.

In der gezeigten Ausführungsform umfasst der Hüllkurvendemodulator 205 eine Diode 215, zwei Widerstände 220 und einen Kondensator 225. Der beispielhaft gezeigt Hüllkurvendemodulator 205 entspricht in seinem grundsätzlichen Aufbau einem Hüllkurvendemodulator in einem Rundfunkempfänger für amplitudenmodulierte Signale.

Die Diode 215 ist in Sperrrichtung angeordnet, so dass das durch den Hüllkurvendemodulator 205 bereitgestellte Signal nur die negativen Halbwellen des elektrischen Betriebsparameters am Resonanztransformator 135 betrifft und folglich stets negativ ist. In einer anderen als der dargestellten Ausführungsform kann der Hüllkurvendemodulator 205 jedoch auch dazu eingerichtet sein, ein positives Ausgangssignal bereitzustellen.

Der Differenzierer 210 ist vom invertierenden Typ. Er umfasst einen Verstärker 230, zwei Widerstände 235 und einen Kondensator 240. Der Verstärker 230 kann in bevorzugter Weise einen Operationsverstärker umfassen. Andere Ausführungsformen des Differenzierers 210 sind ebenfalls möglich und es ist nicht zwingend erforderlich, exakt die dargestellte Verschaltung der Bauelemente 230 bis 240 zu verwenden.

Der Differenzierer 210 ist dazu eingerichtet, ein ihm bereitgestelltes Eingangssignal nach der Zeit abzuleiten. Dabei wird eine Zeitkonstante für die Ableitung durch die Widerstände 235 und den Kondensator 240 bestimmt. Als Ausgangssignal stellt der Differenzierer 210 ein Signal bereit, das auf eine Änderung seines eigenen Eingangssignals hinweist. Insgesamt weist in der vorliegenden Schaltung von Figur 2 das Ausgangssignal des Differenzierers 210 auf einen Betriebszustand des Resonanztransformators 135 hin. Befindet sich die gezeigte Schaltung 200 im eingeschwungenen Zustand, in welchem eine elektrische Last, eine Frequenz und eine Anregung des Resonanztransformators 135 konstant sind, so weist ein am Ausgang des Differenziers 210 bereitgestelltes Ausgangssignal darauf hin, dass sich eine Lage des Empfängers 110 bzw. der Empfangsspule 150 bezüglich des Senders 105 bzw. der Sendespule 140 ändert.

Dieses Signal wird der Steuereinrichtung 130 bereitgestellt, die eine Anpassung der Frequenz, mit der sie die steuerbaren Schalter 120 ansteuert, davon abhängig macht, ob eine Lageänderung vorliegt oder nicht. Insbesondere kann eine Häufigkeit, mit der Ansteuerfrequenz der Schalter 120 an geänderte Umstände am Resonanztransformator 135 angepasst wird, abhängig sein von dem durch den Differenzierer 210 bereitgestellten Signal. Dadurch kann insbesondere die Ansteuerung dann häufiger angepasst werden, wenn gerade eine Lageänderung des Empfängers 110 bezüglich des Senders 105 vorliegt.

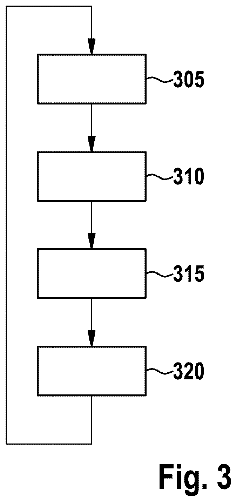

Figur 3 zeigt ein Ablaufdiagramm eines Verfahrens 300 zur Steuerung des Senders 105 einer der Figuren 1 oder 2 zur drahtlosen Energieübertragung. In einem ersten Schritt wird ein elektrischer Betriebsparameter des Resonanztransformators 135 abgetastet. Anschließend wird in einem Schritt 310 das der abgetastete Betriebsparameter demoduliert, um ein Signal zu erhalten, das auf die Schwingung am Resonanztransformator 135 bzw. dessen Resonanzfrequenz hinweist.

Danach erfolgt in einem Schritt 315 eine zeitliche Differenzierung des demodulierten Signals, um ein weiteres Signal bereitzustellen, das auf eine Änderung der Amplitude des Stroms bzw. der Spannung im Resonanzkreis hinweist. In einem weiteren Schritt 320 wird auf der Basis des im Schritt 315 bereitgestellten Signals die Häufigkeit einer Anpassung derjenigen Frequenz gesteuert, mit der die Steuereinrichtung 130 die Schalter 120 öffnet und schließt. Anschließend kehrt das Verfahren 300 zum Schritt 305 zurück und kann erneut durchlaufen.

## Patentansprüche

1. Sender (105) zur drahtlosen Energieübertragung, umfassend:
- einen Resonanztransformator (135) mit einer Sendespule (140) und einer Resonanzkapazität (145),
- eine Brückenschaltung (125) zur Anregung des Resonanztransformators (135)
- eine Steuereinrichtung (130) zur Ansteuerung der Brückenschaltung (125) mit einer Ansteuerfrequenz und
- eine Rückkopplung (205, 210) vom Resonanztransformator (135) zur Steuereinrichtung (130) über einen Demodulator (205) mit einem nachgeschalteten Differenzierer (210),
- wobei der Demodulator (205) dazu eingerichtet ist, auf der Basis des Stroms oder der Spannung an der Sendespule (140) oder der Resonanzkapazität (145) eine Hüllkurve zu bestimmen, die ein Maß für den Strom bzw. die Spannung unter Vernachlässigung dessen periodischer Schwingungen repräsentiert,
wobei der Differenzierer (210) dazu eingerichtet ist, am Ausgang ein Signal bereitzustellen, welches darauf hinweist, dass sich eine Lage eines Empfängers (110) bzw. einer Empfangsspule (150) bezüglich des Senders (105) bzw. der Sendespule (140) ändert,
**dadurch gekennzeichnet, dass**
- die Rückkopplung (205, 210) eingerichtet ist, die Steuereinrichtung (130) derart anzusteuern, dass die Steuereinrichtung (130) die Brückenschaltung (125) deaktiviert, wenn eine Lageänderung der geometrischen Anordnung des Empfängers (110) bezüglich der Sendespule (140) ein vorbestimmtes Maß übersteigt,
- wobei eine Häufigkeit, mit der die Steuereinrichtung (130) die Ansteuerfrequenz der Brückenschaltung (125) an geänderte Umstände am Resonanztransformator (135) anpasst, abhängig ist von dem durch den Differenzierer (210) bereitgestellten Signal.

2. Sender (105) nach Anspruch 1, **dadurch gekennzeichnet, dass** der Demodulator (205) eingerichtet ist, ein negatives Ausgangssignal bereitzustellen und der Differenzierer (210) invertierend ist.

3. Sender (105) nach einem der vorhergehenden Ansprüche, **dadurch gekennzeichnet, dass** die Anpassungshäufigkeit proportional zur Änderung der geometrischen Anordnung ist.

4. System (100) zur Energieübertragung, umfassend einen Sender (105) nach einem der vorangehenden Ansprüche und einen Empfänger (110) zur Anordnung im Bereich der Sendespule (140).

## Claims

1. Transmitter (105) for wireless power transmission, comprising:
- a resonant transformer (135) having a transmitting coil (140) and a resonant capacitance (145),
- a bridge circuit (125) for exciting the resonant transformer (135),
- a control device (130) for actuating the bridge circuit (125) at an actuation frequency and
- a feedback loop (205, 210) from the resonant transformer (135) to the control device (130) via a demodulator (205) with a downstream differentiator (210),
- wherein the demodulator (205) is configured to take the current or the voltage on the transmitting coil (140) or the resonant capacitance (145) as a basis for determining an envelope that represents a measure of the current or the voltage ignoring the periodic variations therein,
wherein the differentiator (210) is configured to provide at the output a signal that indicates that a position of a receiver (110) or of a receiving coil (150) relative to the transmitter (105) or the transmitting coil (140) changes,
**characterized in that**
- the feedback loop (205, 210) is configured to actuate the control device (130) such that the control device (130) deactivates the bridge circuit (125) if a change of position of the geometric arrangement of the receiver (110) relative to the transmitting coil (140) exceeds a predetermined measure,
- wherein a regularity with which the control device (130) matches the actuation frequency of the bridge circuit (125) to changed circumstances on the resonant transformer (135) is dependent on the signal provided by the differentiator (210).

2. Transmitter (105) according to Claim 1, **characterized in that** the demodulator (205) is configured to provide a negative output signal and the differentiator (210) is inverting.

3. Transmitter (105) according to either of the preceding claims, **characterized in that** the regularity of matching is proportional to the change in the geometric arrangement.

4. System (100) for power transmission, comprising a transmitter (105) according to one of the preceding claims and a receiver (110) for arrangement in the region of the transmitting coil (140) .

## Revendications

1. Émetteur de transmission d'énergie sans fil (105) comprenant :
- un transformateur résonant (135) comportant une bobine d'émission (140) et un condensateur résonant (145),
- un circuit en pont (125) permettant d'exciter le transformateur résonant (135),
- un dispositif de commande (130) permettant de commander le circuit en pont (125) à une fréquence d'excitation et
- un système de rétroaction (205, 210) du transformateur résonnant (135) vers le dispositif de commande (130) par l'intermédiaire d'un démodulateur (205) qui comporte un différentiateur (210) monté en aval,
- dans lequel le démodulateur (205) est conçu pour déterminer, sur la base du courant ou de la tension au niveau de la bobine d'émission (140) ou du condensateur résonant (145), une enveloppe représentant une mesure du courant ou de la tension en négligeant ses oscillations périodiques,
dans lequel le différentiateur (210) est conçu pour fournir en sortie un signal indiquant qu'une position d'un récepteur (110) ou d'une bobine de réception (150) varie par rapport à l'émetteur (105) ou à la bobine d'émission (140),
**caractérisé en ce que**
- le système de rétroaction (205, 210) est conçu pour commander le dispositif de commande (130) de manière à ce que le dispositif de commande (130) désactive le circuit en pont (125) lorsqu'une variation de position de la disposition géométrique du récepteur (110) par rapport à la bobine d'émission (140) dépasse une valeur prédéterminée,
- dans lequel une fréquence avec laquelle le dispositif de commande (130) adapte la fréquence de commande du circuit en pont (125) à des circonstances modifiées au niveau du transformateur résonant (135) dépend du signal fourni par le différentiateur (210).

2. Émetteur (105) selon la revendication 1, **caractérisé en ce que** le démodulateur (205) est conçu pour fournir un signal de sortie négatif et **en ce que** le différentiateur (210) est de type inverseur.

3. Émetteur (105) selon l'une des revendications précédentes, **caractérisé en ce que** la fréquence d'adaptation est proportionnelle à la variation de la disposition géométrique.

4. Système (100) de transmission d'énergie comprenant un émetteur (105) selon l'une des revendications précédentes et un récepteur (110) destiné à être disposé dans la zone de la bobine d'émission (140) .
